(19) Europäisches Patentamt
European Patent Office
Office européen des brevets

(11) **EP 3 693 922 A1**

(12) **EUROPEAN PATENT APPLICATION**

(43) Date of publication:
**12.08.2020 Bulletin 2020/33**

(51) Int Cl.:
**G06T 7/33** (2017.01)   **G06K 9/00** (2006.01)
**G06K 9/62** (2006.01)

(21) Application number: **19156435.0**

(22) Date of filing: **11.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Deng, Haowen**
  **80809 München (DE)**
• **Birdal, Tolga**
  **80807 München (DE)**
• **Ilic, Slobodan**
  **81547 München (DE)**

(54) **AN APPARATUS AND A METHOD FOR PERFORMING A DATA DRIVEN PAIRWISE REGISTRATION OF THREE-DIMENSIONAL POINT CLOUDS**

(57)    A method and apparatus (1) for performing a data driven pairwise registration of three-dimensional, 3D, point clouds, PC, said apparatus comprising at least one scanner (2) adapted to capture a first local point cloud, PC1, in a first scan and a second local point cloud, PC2, in a second scan; a PPF deriving unit (3) adapted to process both captured local point clouds (PC1, PC2) to derive associated point pair features (PPF1, PPF2); a PPF-Autoencoder (4) adapted to process the derived point pair features (PPF1, PPF2) to extract corresponding PPF-feature vectors ($V_{PPF1}$, $V_{PPF2}$) ; a PC-Autoencoder (5) adapted to process the captured local point clouds (PC1, PC2) to extract corresponding PC-feature vectors ($V_{PC1}$, $V_{PC2}$); a subtractor (6) adapted to subtract the PPF-feature vectors ($V_{PPF1}$, $V_{PPF2}$) from the corresponding PC-vectors ($V_{PC1}$, $V_{PC2}$) to calculate latent difference vectors (LDV1, LDV2) for both captured point clouds (PC1, PC2) concatenated to a latent difference vector (CLDV); and a pose prediction network (8) adapted to calculate a relative pose prediction, T, between the first and second scan performed by said scanner (2) on the basis of the concatenated latent difference vector (CLDV).

FIG 1

EP 3 693 922 A1

**Description**

The invention relates to a method and apparatus for performing a data driven pairwise registration of three-dimensional point clouds generated by a scanner.

Matching local keypoint descriptors is a step toward automated registration of three-dimensional overlapping scans. Point set registration, also known as point matching, is a process of finding a spatial transformation that does align two point sets. A point set or point cloud can comprise raw data from a three-dimensional scanner. Contrary to two-dimensional descriptors, learned three-dimensional descriptors lack any kind of local orientation assignment and consequently, any subsequent pose estimator is coerced to settle for nearest neighbor queries and exhaustive RANSAC iterations to robustly compute the aligning transformation. This forms neither a reliable process nor is it computationally efficient. Matching local keypoint descriptors form a step toward automated registration of three-dimensional overlapping scans. Matches can contain outliers that severely hinder the scan registration, i.e. the alignment of scans resulting in computing six degree of freedom transformations between them. A conventional remedy is performing a RANSAC procedure. The RANSAC procedure does sample three corresponding matching pairs a number of times and can transform one scan to the other using a computed rigid transformation counting the number of inliers taking into account all keypoints. This sampling procedure is computationally not efficient.

Accordingly, it is an object of the present invention to provide a method and apparatus providing a more efficient registration of three-dimensional point clouds.

This object is achieved according to a first aspect of the present invention by an apparatus comprising the features of claim 1.

The invention provides according to the first aspect of the present invention an apparatus for performing a data driven pairwise registration of three-dimensional point clouds, said apparatus comprising: at least one scanner adapted to capture a first local point cloud in a first scan and a second local point cloud in a second scan,
a PPF deriving unit adapted to process both captured local point clouds to derive associated point pair features,
a PPF-Autoencoder adapted to process the derived point pair features to extract corresponding PPF-feature vectors,
a PC-Autoencoder adapted to process the captured local point clouds to extract corresponding PC-feature vectors,
a subtractor adapted to subtract the PPF-feature vectors from the corresponding PC-vectors to calculate latent difference vectors for both captured point clouds concatenated to a latent difference vector and
a pose prediction network adapted to calculate a relative pose prediction between the first and second scan performed by said scanner on the basis of the concatenated latent difference vector.

In a possible embodiment of the apparatus according to the first aspect of the present invention, the apparatus further comprises a pose selection unit adapted to process a pool of calculated relative pose predictions for selecting a fitting pose prediction.

In a possible embodiment of the apparatus according to the first aspect of the present invention, the pose prediction network comprises a multilayer perceptron, MLP, rotation network used to decode the concatenated latent difference vector.

In a possible embodiment of the apparatus according to the first aspect of the present invention, the PPF-Autoencoder comprises
an Encoder adapted to encode the point pair features derived by the PPF deriving unit to calculate the latent PPF-feature vectors supplied to the subtractor and comprising
a Decoder adapted to reconstruct the point pair features from the latent PPF-feature vector.

In a possible embodiment of the apparatus according to the first aspect of the present invention, the PC-Autoencoder comprises
an Encoder adapted to encode the captured local point cloud to calculate the latent PC-feature vector supplied to the subtractor and comprising
a Decoder adapted to reconstruct the local point cloud from the latent PC-feature vector.

The invention further provides according to a further second aspect a data driven computer-implemented method for pairwise registration of three-dimensional 3D point clouds comprising the features of claim 6.

The invention provides according to the second aspect a data driven computer-implemented method for pairwise registration of three-dimensional point clouds, the method comprising the steps of:

capturing a first local point cloud in a first scan and a second local point cloud in a second scan by at least one scanner,
processing both captured local point clouds to derive associated point pair features,
supplying the point pair features of both captured local point clouds to a PPF-Autoencoder to provide PPF-feature vectors and supplying the captured local point clouds to a PC-Autoencoder to provide a PC-feature vector,
subtracting the PPF-feature vectors provided by the PPF-Autoencoder from the corresponding PC-vectors provided by the PC-Autoencoder to calculate a latent difference vector for each captured point cloud and
concatenating the calculated latent difference vectors to provide a concatenated latent difference vector applied to a pose prediction network to calculate a relative pose prediction between the first and second scan.

In a possible embodiment of the method according to the second aspect of the present invention, a pool of relative pose predictions is generated for a plurality of point cloud pairs each comprising a first local point cloud and a second local point cloud.

In a further possible embodiment of the method according to the second aspect of the present invention, the generated pool of relative pose predictions is processed to perform a pose verification.

In a still further possible embodiment of the method according to the second aspect of the present invention, the PPF-Autoencoder and the PC-Autoencoder are trained based on a calculated loss function.

In a possible embodiment of the method according to the second aspect of the present invention, the loss function is composed of a reconstruction loss function, a pose prediction loss function and a feature consistency loss function.

In a further possible embodiment of the method according to the second aspect of the present invention, the PPF-feature vector provided by the PPF-Autoencoder comprises rotation invariant features and wherein the PC-feature vectors provided by the PC-Autoencoder comprise not rotation invariant features.

In the following, possible embodiments of the different aspects of the present invention are described in more detail with reference to the enclosed figures.

Fig. 1      shows a block diagram for illustrating a possible exemplary embodiment of an apparatus for performing a data driven pairwise registration of three-dimensional point clouds according to the first aspect of the present invention;

Fig. 2      shows a flowchart for illustrating a possible exemplary embodiment of a data driven computer-implemented method for pairwise registration of three-dimensional point clouds according to a further aspect of the present invention;

Fig. 3      shows a schematic diagram for illustrating a possible exemplary implementation of an apparatus according to the first aspect of the present invention;

Fig. 4      shows a further schematic diagram for illustrating a further exemplary implementation of an apparatus according to the first aspect of the present invention.

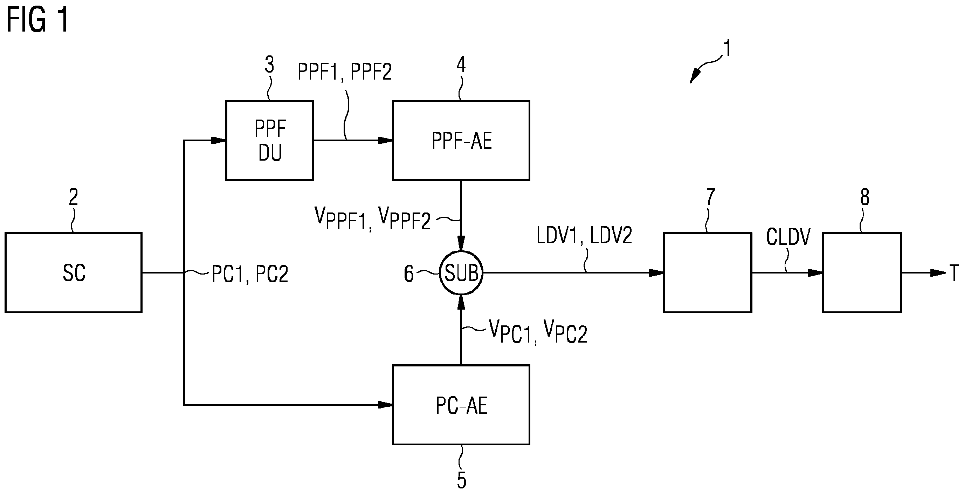

As can be seen in the block diagram of Fig. 1, an apparatus 1 for performing a data driven pairwise registration of three-dimensional, 3D, point clouds PC comprises in the illustrated exemplary embodiment at least one scanner 2 adapted to capture a first local point cloud PC1 in a first scan and a second local point cloud PC2 in a second scan. In the illustrated exemplary embodiment of Fig. 1, the apparatus 1 comprises one scanner 2 providing both point clouds PC1, PC2. In an alternative embodiment, two separate scanners can be used wherein a first scanner generates a first local point cloud PC1 and a second scanner generates a second local point cloud PC2.

The apparatus 1 shown in Fig. 1 comprises a PPF deriving unit 3 adapted to process both captured local point clouds PC1, PC2 to derive associated point pair features PPF1, PPF2.

The apparatus 1 further comprises a PPF-Autoencoder 4 adapted to process the derived point pair features PPF1, PPF2 output by the PPF deriving unit 3 to extract corresponding PPF-feature vectors $V_{PPF1}$, $V_{PPF2}$ as illustrated in the block diagram of Fig. 1.

The apparatus 1 further comprises a PC-Autoencoder 5 adapted to process the captured local point clouds PC1, PC2 generated by the scanner 2 to extract corresponding PC-feature vectors $V_{PC1}$, $V_{PC2}$.

The apparatus 1 further comprises a subtractor 6 adapted to subtract the PPF-feature vectors $V_{PPF1}$, $V_{PPF2}$ from the corresponding PC-vectors $V_{PC1}$, $V_{PC2}$ to calculate latent difference vectors LDV1, LDV2 for both captured point clouds PC1, PC2.

The apparatus 1 comprises a concatenation unit 7 used to concatenate the received latent difference vectors LDV1, LDV2 to a single concatenated latent difference vector CLDV as shown in the block diagram of Fig. 1.

The apparatus 1 further comprises a pose prediction network 8 adapted to calculate a relative pose prediction T between the first and second scan performed by the scanner 2 on the basis of the received concatenated latent difference vector CLDV. In a possible embodiment, the apparatus 1 further comprises a pose selection unit adapted to process a pool of calculated relative pose predictions T for selecting a fitting pose prediction T. The pose prediction network 8 of the apparatus 1 can comprise in a possible embodiment a multilayer perceptron MLP rotation network used to decode the received concatenated latent difference vector CLDV.

The apparatus 1 as shown in Fig. 1 comprises two Autoencoders, i.e. a PPF-Autoencoder 4 and a PC-Autoencoder 5. The Autoencoders 4, 5 can comprise neural networks adapted to copy inputs to the outputs. Autoencoders work by compressing the received input into a latent space representation and then reconstruct the output from this latent space representation. Each Autoencoder comprises an Encoder and a Decoder.

The PPF-Autoencoder 4 comprises in a possible embodiment an Encoder adapted to encode the point pair features PPF derived by the PPF deriving unit 3 to calculate the latent PPF-feature vectors $V_{PPF1}$, $V_{PPF2}$ supplied to the subtractor 6 of the apparatus 1. The PPF-Autoencoder 4 further comprises a Decoder adapted to reconstruct the point pair features from the latent PPF-feature vector.

Further, the PC-Autoencoder 5 of the apparatus 1 comprises in a possible embodiment an Encoder adapted to encode the captured local point cloud to calculate the latent PC-feature vectors $V_{PC1}$, $V_{PC2}$ supplied to the subtractor 6 and a Decoder adapted to reconstruct the local point cloud PC from the latent PC-feature vector.

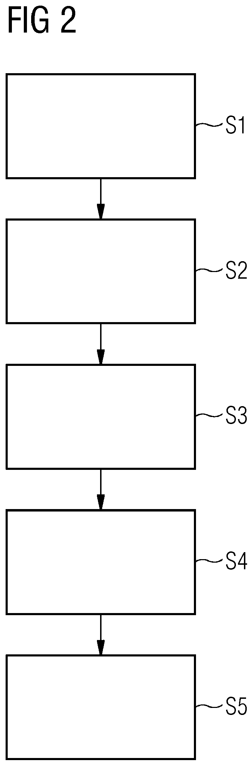

Fig. 2 illustrates a possible exemplary embodiment of a data driven computer-implemented method for pairwise registration of three-dimensional, 3D, point clouds according to a further aspect of the present invention. In the illustrated exemplary embodiment, the data driven computer-implemented method comprises five main steps S1 to S5.

In a first step S1, a first local point cloud PC1 is captured in a first scan and a second local point cloud PC2 is captured in a second scan by at least one scanner, e.g. by a single scanner 2 as illustrated in the block diagram of Fig. 1 or by two separate scanners.

In a further step S2, both captured local point clouds PC1, PC2 are processed to derive associated point pair features PPF1, PPF2.

In a further step S3, the point pair features PPF1, PPF2 derived in step S2, for both captured local point clouds PC1, PC2 are supplied to a PPF-Autoencoder 4 to provide PPF-feature vectors $V_{PPF1}$, $V_{PPF2}$ and the captured local point clouds PC1, PC2 are supplied to a PC-Autoencoder 5 to provide PC-feature vectors $V_{PC1}$, $V_{PC2}$.

In a further step S4, the PPF-feature vectors $V_{PPF1}$, $V_{PPF2}$ provided by the PPF-Autoencoder 4 are subtracted from the corresponding PC-vectors $V_{PC1}$, $V_{PC2}$ provided by the PC-Autoencoder 5 to calculate a latent difference vector LDV1, LDV2 for each captured point cloud PC1, PC2.

In a further step S5, the two calculated latent difference vectors LDV1, LDV2 are automatically concatenated to provide a concatenated latent difference vector CLDV applied to a pose prediction network to calculate a relative pose prediction T between the first and second scan.

In a possible embodiment, a pool of relative pose predictions T can be generated for a plurality of point cloud pairs each comprising a first local point cloud PC1 and a second local point cloud PC2. The generated pool of relative pose predictions T can be processed in a possible embodiment to perform a pose verification.

In a possible embodiment, the PPF-Autoencoder 4 and the PC-Autoencoder 5 can be trained based on a calculated loss function L. The loss function L can be composed in a possible exemplary embodiment of a reconstruction loss function $L_{rec}$, a pose prediction loss function $L_{pose}$ and a feature consistency loss function $L_{feat}$.

In a possible embodiment, the PPF-feature vectors $V_{PPF1}$, $V_{PPF2}$ provided by the PPF-Autoencoder 4 comprise rotation invariant features whereas the PC-feature vectors $V_{PC1}$, $V_{PC2}$ provided by the PC-Autoencoder 5 comprise not rotation invariant features.

With the data driven computer-implemented method for pairwise registration of three-dimensional point clouds PC, it is possible to learn robust local feature descriptors in three-dimensional scans together with the relative transformation between matched local keypoint patches. The estimation of relative transformation between matched keypoints r the computation complexity of registration. Further, the computer-implemented method according to the present invention is faster and more accurate than conventional RANSAC processes and does also result in learning of more robust keypoint or feature descriptors than conventional approaches.

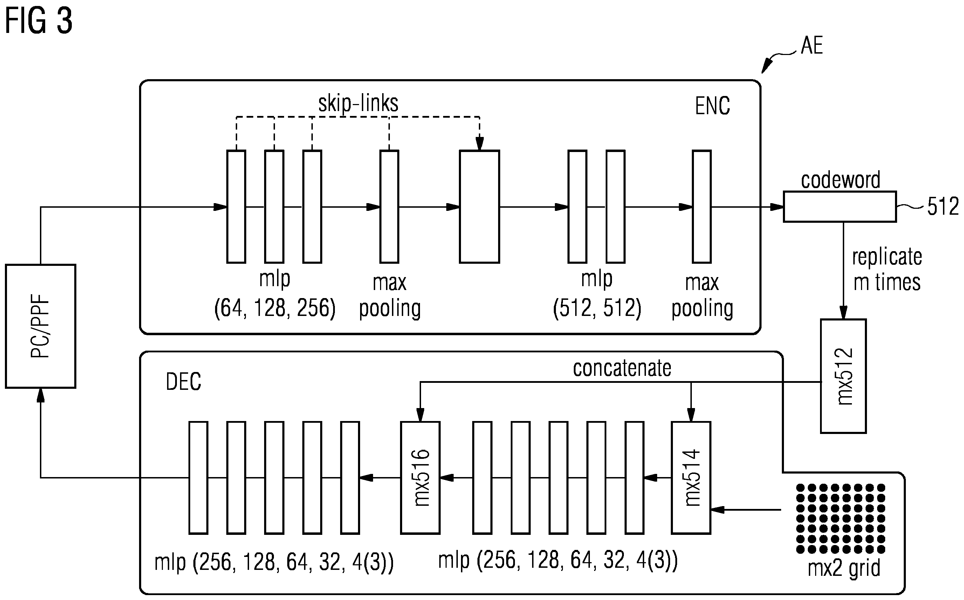

The method according to the present invention does disentangle pose from intermediate feature pairs. The method and apparatus 1 according to the present invention employ a twin architecture comprising a PPF-Autoencoder 4 and a PC-Autoencoder 5 wherein each Autoencoder consists of an Encoder and a Decoder as illustrated also in the block diagram of Fig. 3.

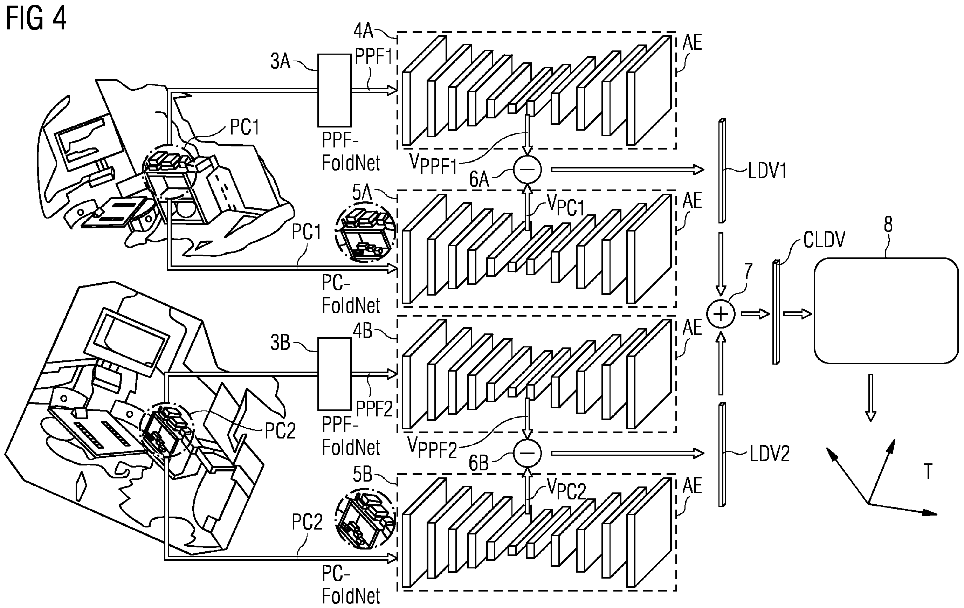

In the illustrated implementation of Fig. 3, the Autoencoder comprises an Encoder ENC and a Decoder DEC. The Autoencoder AE receives a point cloud PC or point per features PPF and can compress the input to a latent feature representation. As also illustrated in the block diagram of Fig. 4 the apparatus can comprise two separate Autoencoders AE, for each PC cloud with separate input sources. The PPF-FoldNets 4A, 4B and the PC-FoldNets 5A, 5B can be trained separately and are capable to extract rotation-invariant and rotation-variant features, respectively. The features extracted by each PPF-FoldNet 4A, 4B are rotation-invariant and consequently, the same across the same local patches under different poses, whereas the features extracted by the PC-FoldNet 5A, 5B change under different pose, i.e. are not rotation-invariant. Accordingly, the method and apparatus 1 uses the features extracted by the PPF-FoldNet as the canonical features, i.e. the features of the canonical pose patch. By subtracting the PPF-FoldNet features from the PC-FoldNet features, the remaining part contains mainly geometry-free pose information. This geometry-free pose information can be supplied to a post prediction network 8 to decode the pose information from the obtained difference of features.

With respect to data preparation, it is not trivial to find a canonical pose for a given local patch. The local reference frame might be helpful but is normally not that reliable since it can be largely affected by noise. Due to the absence of a canonical pose, it is challenging to define the absolute pose of local patches. It is relevant that local patches from once partial scan can be aligned with their correspondences from another partial scan under the same relative transformation. This ground truth information has been provided in many available datasets for training. Instead of trying to find the ground-truth pose of local patches as training supervision, the method according to the present invention does combine pose features of two correspondent patches and uses the pose prediction network 8 to recover a relative pose between them as also illustrated in the block diagram of Fig. 4.

Considering the fact that one can use pairs of fragments or partial scans for training the network to predict a relative pose T, it can be beneficial to make use of this pair relationship as an extra signal for the PPF-FoldNet to extract better local features. The training of the network can be done in a completely unsupervised way. One can use an existing pair of relationships to guarantee that features extracted from the same patches are as close as possible, regardless of noise, missing parts or cluttering. During training, one can add an extra L2 loss on the PPF-FoldNet intermediate features generated for the patch pair. In this way, the quality of the learned features can be further increased.

For a given pair of partial scans, a set of local correspondences can be established using features extracted from the PPF-FoldNet. Each corresponding pair can generate one hypothesis for the relative pose between them, which also forms a vote for the relative pose between two partial scans. Accordingly, it is possible to get a pool of hypotheses or relative pose predictions generated by all found correspondences. Since not all generated hypotheses are correct one can insert in a possible embodiment the hypothesis into a RANSAC-like pipeline, i.e. exhaustively verify each hypothesis and score them, wherein the best scored hypothesis is kept as the final prediction.

In a further possible embodiment, the hypothesis can be transformed into a Hough space to find peaks in the space where most hypotheses cluster together. In general, this relies on an assumption that a subset of correct predictions are grouped together, which is valid under most circumstances.

With the method according to the present invention, it is possible to generate better local features for establishing local correspondences. The method is able to predict a relative pose T given only two pair patches instead of requiring at least three pairs for generating a minimal hypothesis like in RANSAC procedure.

The better local features can be extracted thanks to a combination of the advanced network structure and a weakly supervised training scheme. The pipeline of recovering relative pose information given a pair of local patches or point clouds can be incorporated into a robust 3D reconstruction pipeline.

Purely geometric local patches typically carry two pieces of information, namely structure and motion:

(1) 3D structure summarized by the points themselves P = $\left\{\rho_i | \rho_i \in \mathbb{R}^{Nx3}\right\}$ where $\rho = [x, y, z]^T$.

(2) The motion, which in our context corresponds to the 3D transformation or the pose $T_i \in SE(3)$ holistically orienting and spatially positioning the point set P:

$$SE(3) = \left\{ T \in \mathbb{R}^{4x4} \colon T = \begin{bmatrix} R & t \\ 0^T & 1 \end{bmatrix} \right\} \qquad (1)$$

where $R \in SO(3)$ and $t \in \mathbb{R}^3$. A point set $\mathbf{P}_i$, representing a local patch is generally viewed as a transformed replica of its canonical version $P_i^c \colon P_i = T_i \otimes P_i^c$. Often times, finding such a canonical absolute pose $T_i$ from a single local patch involves computing local reference frames [36] that are known to be unreliable. The invention is based on the premise that a good local (patchwise) pose estimation leads to a good global rigid alignment of two fragments. First, by decoupling the pose component from the structure information, one can devise a data driven predictor network capable of regressing the pose for arbitrary patches and showing good generalization properties.

A naive way to achieve tolerance to 3D-structure is to train a network for pose prediction conditioned on a database of input patches and leave the invariance up to the network. Unfortunately, networks trained in this manner either demand a very large collection of unique local patches or simply lack generalization. To alleviate this drawback, the structural components are eliminated by training an invariant-equivariant network pair and using the intermediary latent space arithmetic. An equivariant function $\Psi$ is characterized by:

$$\Psi(P) = \Psi\left(T \otimes P^c\right) = g(T)\Psi(P^c) \qquad (2)$$

where g(.) is a function that is only dependent upon the pose. When $g(T) = I$, $\Psi$ is said to be T-invariant.

For any input **P** leads to the outcome of canonical one $\Psi(P) \leftarrow \Psi(P^c)$. When $g(T) \neq I$, it can be assumed that the equivariant action of T can be approximated by some additive linear operation:

$$g(\mathrm{T})\Psi(\mathrm{P}^c) \approx h(\mathrm{T}) + \Psi(\mathrm{P}^c) \quad . \qquad (3)$$

$h(\mathrm{T})$ being a probably highly non-linear function of T. By plugging eq. (3) into eq. (2), one arrives at:

$$\Psi(\mathrm{P}) - \Psi(\mathrm{P}^c) \approx h(\mathrm{T}) \qquad (4)$$

that is, the difference in the latent space can approximate the pose up to a non-linearity, $h$. By approximating the inverse of $h$ by a four-layer MLP network $h^{-1}(\cdot) \triangleq \rho(\cdot)$ and by regressing the motion (rotational) terms:

$$\rho(f) \approx R|t \qquad (5)$$

where $f = \Psi(\mathrm{P})$ - $\Psi(\mathrm{P}^c)$. Note that $f$ solely explains the motion and hence, can generalize to any local patch structure, leading to a powerful pose predictor under the above assumptions.

Note that $\rho(\cdot)$ can be directly used to regress the absolute pose to a canonical frame. Yet, due to the aforementioned difficulties of defining a unique local reference frame, this is not advisable. Since the given scenario considers a pair of scenes, one can safely estimate a relative pose rather than the absolute, ousting the prerequisite for a nicely estimated LRF. This also helps to easily forge the labels needed for training. Thus, it is possible to model $\rho(\cdot)$ as a relative pose predictor network 8 as shown in Figs. 1,4.

Corresponding local structures of two scenes ($i, j$) that are well-registered under a rigid transformation $T_{ij}$ also align well with $T_{ij}$. As a result, the relative pose between local patches can be easily obtained by calculating the relative pose between the fragments.

To realize a generalized relative pose prediction, one can implement three key components: an invariant network $\Psi(\mathrm{P}^c)$ where $g(T) = \mathrm{I}$, a network $\Psi(\mathrm{P})$ that varies as a function of the input and a MLP $\rho(\cdot)$. A recent PPF-FoldNet Autoencoder is suitable to model $\Psi(\mathrm{P}^c)$, as it is unsupervised, works on point patches and achieves true invariance thanks to the point pair features (PPF) fully marginalizing the motion terms. Interestingly, by keeping the network architecture identical as PPF-FoldNet, if the PPF part is substituted with the 3D points themselves (P), the intermediate features are dependent upon both structure and pose information. This PC-FoldNet is used as an equivariant network $\Psi(\mathrm{P}) = g(T) \Psi(\mathrm{P}^c)$. By using a PPF-FoldNet and a PC-FoldNet it is possible to learn rotation-invariant and -variant features respectively. They share the same architecture while performing a different encoding of local patches, as shown in Fig. 3. Taking the difference of the encoder outputs of the two networks, i.e. the latent features of PPF- and PC-FoldNet respectively, by the subtractor 6 results in features which specialize almost exclusively on the pose (motion) information. Those features are subsequently fed into the generalized pose predictor network 8 to recover the rigid relative transformation. The overall architecture of our complete relative pose prediction is illustrated in Fig. 4.

The networks can be trained with multiple cues, both supervised and unsupervised, guiding the networks to find the optimal parameters. In particular, the loss function L can be composed of three parts:

$$L = L_{rec} + \lambda_1 L_{pose} + \lambda_2 L_{feat} \qquad (6)$$

$L_{rec}$, $L_{pose}$ and $L_{feat}$ are the reconstruction, pose prediction and feature consistency losses, respectively. $L_{rec}$ reflects the reconstruction fidelity of PC/PPF-FoldNet. To enable the encoders of PPF/PC-FoldNet to generate good features for pose regression, as well as for finding robust local correspondences, similar to the steps in PPF-FoldNet, one can use the Chamfer Distance as the metric to train both Autoencoders AE in an unsupervised manner:

$$L_{rec} = \frac{1}{2}\left(d_{cham}(\mathrm{P}, \hat{P}) + d_{cham}(F_{ppf}, \hat{F}_{ppf})\right) \qquad (7)$$

where

$$d_{cham}\left(X, \widehat{X}\right) = \tag{8}$$

$$max\left\{\frac{1}{|X|}\sum_{x\in X}\min_{\hat{x}\in\hat{x}}\|x - \hat{x}\|_2 , \frac{1}{|\widehat{X}|}\sum_{\hat{x}\in\widehat{X}}\min_{x\in X}\|x - \hat{x}\|_2\right\}$$

where ^ operator refers to the reconstructed (estimated) set. $F_{ppf}$ refers to the point pair features of the point set computed identically.

A correspondence of two local patches are centralized and normalized before being sent into the PC/PPF-FoldNets. This cancels the translational part $t \in \mathbb{R}^3$. The main task of the pose prediction loss $L_{pose}$ is to enable the pose prediction network to predict the relative rotation $R_{12} \in S0(3)$ between given patches. Hence, a preferred choice for $L_{pose}$ describes the discrepancy between the predicted and the ground truth rotations:

$$L_{pose} = \|q - q^*\|_2 \tag{9}$$

Note that the rotations are parametrized by quaternions. This is primarily due to decreased the number of parameters to regress and lightweight projection operation-vector-normalization.

The translation $t^*$, conditioned on the hypothesized correspondence $(p_1, p_2)$ and the predicted rotation $q^*$ can be computed by:

$$t^* = p_1 - R^* p_2 \tag{10}$$

wherein $R^*$ corresponds to the matrix representation of $q^*$.

The pose prediction network 8 requires pairs of local patches for training. One can additionally make use of pair information as an extra weak supervision signal to further facilitate the training of the PPF-FoldNet. Such guidance can improve the quality of intermediate latent features that have been previously trained in a fully unsupervised fashion. In specific, correspondent features subject to noise, missing data or clutter can generate a high reconstruction loss causing the local features to be different even for the same local patches. This additional information helps to guarantee that the features extracted from identical patches are located as close as possible in the embedded space, which is extremely beneficial since it does establish local correspondences allowing to search nearest neighbors in the feature space. The feature consistency loss $L_{feat}$ reads:

$$L_{feat} = \sum_{(p_i,q_i)\in\Gamma} \|f_{pi} - f_{qi}\|_2$$

$$\tag{11}$$

representing a set of correspondent local patches, wherein $f_p$ is a feature extracted at $p$ by the PPF-FoldNet, $f_p \in f_{ppf}$.

The full 6DoF pose can be parameterized by a translation conditioned on matching points(3DoF), and a 3DoF orientation provided by pose prediction network. Thus, having a set of correspondences is equivalent to having a pre-generated set of transformation hypotheses. Note that this is contrary to the standard RANSAC approaches where a pose is parameterized by $m$ = 3-correspondences and where establishing $N$ correspondences can lead to $\binom{N}{m}$ hypotheses to be verified. This small number of hypotheses, already linear in the number of correspondences, makes it possible to exhaustively evaluate the putative matching pair set for pose verification. It is possible to refine the estimate by recomputing the transformation using the surviving inliers. The hypothesis with the highest score is then kept as the final decision.

**Claims**

**1.** An apparatus (1) for performing a data driven pairwise registration of three-dimensional, 3D, point clouds, PC, said apparatus comprising:

(a) at least one scanner (2) adapted to capture a first local point cloud, PC1, in a first scan and a second local point cloud, PC2, in a second scan;
(b) a PPF deriving unit (3) adapted to process both captured local point clouds (PC1, PC2) to derive associated point pair features (PPF1, PPF2);
(c) a PPF-Autoencoder (4) adapted to process the derived point pair features (PPF1, PPF2) to extract corresponding PPF-feature vectors ($V_{PPF1}$, $V_{PPF2}$);
(d) a PC-Autoencoder (5) adapted to process the captured local point clouds (PC1, PC2) to extract corresponding PC-feature vectors ($V_{PC1}$, $V_{PC2}$);
(e) a subtractor (6) adapted to subtract the PPF-feature vectors ($V_{PPF1}$, $V_{PPF2}$) from the corresponding PC-vectors ($V_{PC1}$, $V_{PC2}$) to calculate latent difference vectors (LDV1, LDV2) for both captured point clouds (PC1, PC2) concatenated to a latent difference vector (CLDV); and
(f) a pose prediction network (8) adapted to calculate a relative pose prediction, T, between the first and second scan performed by said scanner (2) on the basis of the concatenated latent difference vector (CLDV).

2. The apparatus according to claim 1 wherein the apparatus (1) further comprises a pose selection unit adapted to process a pool of calculated relative pose predictions, T, for selecting a fitting pose prediction, T.

3. The apparatus according to claim 2 wherein the pose prediction network (8) comprises a multilayer perceptron, MLP, rotation network used to decode the concatenated latent difference vector (CLDV).

4. The apparatus according to any of the preceding claims 1 to 3 wherein the PPF-Autoencoder (4) comprises an Encoder (4A) adapted to encode the point pair features, PPF, derived by the PPF deriving unit to calculate the latent PPF feature vectors ($V_{PPF1}$, $V_{PPF2}$) supplied to the subtractor and comprising a Decoder (4B) adapted to reconstruct the point pair features, PPF, from the latent PPF-feature vector.

5. The apparatus according to any of the preceding claims 1 to 4 wherein the PC-Autoencoder (5) comprises an Encoder (5A) adapted to encode the captured local point cloud (PC) to calculate the latent PC-feature vector ($V_{PC1}$, $V_{PC2}$) supplied to the subtractor and comprising a Decoder (5B) adapted to reconstruct the local point cloud, PC, from the latent PC-feature vector.

6. A data-driven computer-implemented method for pairwise registration of three-dimensional, 3D, point clouds, PC, the method comprising the steps of:

(a) capturing (S1) a first local point cloud, PC1, in a first scan and a second local point cloud, PC2, in a second scan by at least one scanner;
(b) processing (S2) both captured local point clouds (PC1, PC2) to derive associated point pair features (PPF1, PPF2);
(c) supplying (S3) the point pair features (PPF1, PPF2) of both captured local point clouds (PC1, PC2) to a PPF-Autoencoder to provide PPF-feature vectors ($V_{PPF1}$, $V_{PPF2}$) and supplying the captured local point clouds (PC1, PC2) to a PC-Autoencoder to provide a PC-feature vector ($V_{PC1}$, $V_{PC2}$) ;
(d) subtracting (S4) the PPF-feature vectors ($V_{PPF1}$, $V_{PPF2}$) provided by the PPF-Autoencoder from the corresponding PC-vectors ($V_{PC1}$, $V_{PC2}$) provided by the PC-Autoencoder to calculate a latent difference vector (LDV1, LDV2) for each captured point cloud (PC1, PC2) ;
(e) concatenating (S5) the calculated latent difference vectors (LDV1, LDV2) to provide a concatenated latent difference vector (CLDV) applied to a pose prediction network to calculate a relative pose prediction, T, between the first and second scan.

7. The method according to claim 6 wherein a pool of relative pose predictions, T, is generated for a plurality of point cloud, PC, pairs each comprising a first local point cloud, PC1, and a second local point cloud, PC2.

8. The method according to claim 7 wherein the generated pool of relative pose predictions, T, is processed to perform a pose verification.

9. The method according to any of the preceding claims 6 to 8 wherein the PPF-Autoencoder and the PC-Autoencoder are trained based on a calculated loss function, L.

**10.** The method according to claim 9 wherein the loss function, L, is composed of
a reconstruction loss function, $L_{rec}$,
a pose prediction loss function, $L_{pose}$, and
a feature consistency loss function, $L_{feat}$.

**11.** The method according to any of the preceding claims 6 to 10 wherein the PPF feature vector ($V_{PPF1}$, $V_{PPF2}$) provided by the PPF-Autoencoder comprises rotation invariant features and
wherein the PC-feature vectors ($V_{PC1}$, $V_{PC2}$) provided by the PC-Autoencoder comprise not rotation invariant features.

EP 3 693 922 A1

FIG 1

# FIG 2

# FIG 3

AE

ENC

skip-links

mlp
(64, 128, 256)

max
pooling

mlp
(512, 512)

max
pooling

codeword

512

replicate
m times

PC/PPF

DEC

concatenate

mx512

mx516

mx514

mlp (256, 128, 64, 32, 4(3))

mlp (256, 128, 64, 32, 4(3))

mx2 grid

EP 3 693 922 A1

# FIG 4

EP 3 693 922 A1

Europäisches
Patentamt

European
Patent Office

Office européen
des brevets

# EUROPEAN SEARCH REPORT

Application Number

EP 19 15 6435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANDY ZENG ET AL: "3DMatch: Learning the Matching of Local 3D Geometry in Range Scans", ARXIV.ORG, CORNELL UNIVERSITY LIBRARY, 201 OLIN LIBRARY CORNELL UNIVERSITY ITHACA, NY 14853, 27 March 2016 (2016-03-27), XP080692195, * abstract * * page 5; figure 3 * | 1-11 | INV. G06T7/33 G06K9/00 G06K9/62 |
| A | ZENG ANDY ET AL: "3DMatch: Learning Local Geometric Descriptors from RGB-D Reconstructions", IEEE COMPUTER SOCIETY CONFERENCE ON COMPUTER VISION AND PATTERN RECOGNITION. PROCEEDINGS, IEEE COMPUTER SOCIETY, US, 21 July 2017 (2017-07-21), pages 199-208, XP033249355, ISSN: 1063-6919, DOI: 10.1109/CVPR.2017.29 [retrieved on 2017-11-06] * abstract * * pages 3,5; figure 2 * | 1-11 | |
| A | HAOWEN DENG ET AL: "PPFNet: Global Context Aware Local Features for Robust 3D Point Matching", ARXIV.ORG, CORNELL UNIVERSITY LIBRARY, 201 OLIN LIBRARY CORNELL UNIVERSITY ITHACA, NY 14853, 8 February 2018 (2018-02-08), XP081222912, * abstract * * page 3 - page 4; figure 2 * * page 6 * | 1-11 | TECHNICAL FIELDS SEARCHED (IPC) G06T G06K |

-/--

The present search report has been drawn up for all claims

| Place of search | Date of completion of the search | Examiner |
|---|---|---|
| Munich | 18 July 2019 | Katsoulas, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 19 15 6435

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DENG HAOWEN ET AL: "PPF-FoldNet: Unsupervised Learning of Rotation Invariant 3D Local Descriptors", 6 October 2018 (2018-10-06), INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 620 - 638, XP047488931, ISBN: 978-3-642-17318-9 [retrieved on 2018-10-06] * abstract * * page 4 - page 7; figure 1 * ----- | 1-11 | |

TECHNICAL FIELDS
SEARCHED       (IPC)

The present search report has been drawn up for all claims

| Place of search | Date of completion of the search | Examiner |
|---|---|---|
| Munich | 18 July 2019 | Katsoulas, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)